# EUROPEAN PATENT APPLICATION

(11) **EP 4 518 059 A1**
(43) Date of publication of application: **05.03.2025**
(21) Application number: 24197630.7
(22) Date of filing: 30.08.2024
(51) Int. Cl.: H02G 3/04, H02G 3/10, B60L 53/14, B60L 53/31, E04H 12/08

(54) **CHARGING POLE AND CHARGING SYSTEM FOR CHARGING RECHARGABLE VEHICLES**

(30) Priority: 31.08.2023 FI 20235969
(71) Applicant: Ioneed Dsign Oy, 00390 Helsinki (FI)
(72) Inventor: Hakala, Jani, 00390 Helsinki (FI); Leinonen, Erik, 00390 Helsinki (FI); Niiniaho, Marko, 00390 Helsinki (FI); Rautakoski, Abel, 00390 Helsinki (FI)
(74) Representative: LEITZINGER OY

(57) **Abstract**

The invention relates to a charging pole (100;100A,100B,100C) for a rechargeable vehicle, comprising a pole (1) having a rectangular cross section; which cross section is hollow; the cross section having dimensions allowing for cabling two cables (c1,c2;c1',c2'; c1",c2") having a cross sectional area of 50 mm²; the pole (1) comprising a first hole (H1) in one of its sides allowing for the cables (c1,c2;c1',c2'; c1",c2") to be brought through; a connection housing (8) whereto the two cables (c1,c2;c1',c2'; c1",c2"), which cables (c1,c2;c1',c2'; c1",c2") are made of aluminum or other metal, are led into through said hole (H1); and an installation base (2), preferably an installation plate (2), for an EV charger (10) or EV chargers (10). The invention relates to a charging system (S) for charging rechargeable vehicles, implementing said charging pole (100;100A,100B,100C) in a chained configuration.

## Description

### Field of the invention

The invention relates to charging poles and systems for charging rechargeable vehicles, such as electric cars.

### Background of the invention

As rechargeable vehicles have become more common, the need for charging points for electric cars in parking areas has grown rapidly. Charging points are needed in all kinds of properties: apartment buildings, office buildings, housing associations, commercial properties, public and other parking areas.

A special infrastructure of car heating poles intended for pre-heating of combustion engine cars has been built in the area of Finland and partly in the other Nordic countries. However, this heating pole infrastructure with Schuko socket outlets is not suitable for more powerful EV charging devices needed today. Traditional heating poles which have a diameter of 60 mm cannot accommodate thicker cables, which are required by larger groups of parking spaces and for the required power. Also, the foundations of the heating poles are not strong enough for charging devices, which are significantly heavier and larger than today's heating boxes. Due to the risk of snow accumulation and general usability, the charging devices must also be placed higher.

Furthermore, most EV chargers nowadays have varying attachment means, and most require a pole that is only provided by the provider of the EV charger itself.

Furthermore, it is not at the moment possible to make general-purpose chained/serial pre-connected charging readiness cabling with charging poles without charging devices, regardless of the charging device manufacturer.

This has led to a situation where already at the stage of planning of ready-to-charge cabling, a short-term investment has to be made, i.e. the choice of a charging device has to be made, and at the same time the choice of a manufacturer-specific charging stand and cabling method connected to it, which is not a logical sustainable basis for choosing a long-term investment, i.e. the implementation of ready-to-charge cabling.

In the markets of Finland and the Nordic countries, where outdoor areas already have heating poles and where many want to keep Schuko heating along with the cabling of that, this results in a double and expensive system.

The need for charging points has expanded to every parking space and created a need for EV charger-ready cabling for electric vehicles, which can be implemented for all parking spaces in advance without choosing the charging devices in advance.

Charging readiness cabling for properties is an investment for the coming 30-50 years, which is advantageous to be done completely separately from the charging devices, the life cycle of which can be assumed to be 10-15 years. New charging devices are entering the market at an accelerating rate. Currently, charging device manufacturers deliver their devices with their own manufacturer-specific mounting stands, to which devices from other manufacturers are not compatible and cannot be mounted on and which have limited chaining possibilities for serial connection of cabling.

### Summary of the Invention

The object of the invention is to introduce an improved charging pole and a system for charging rechargeable vehicles, such as electric cars.

An object is particularly to introduce a solution by which one or more of the above-mentioned problems of prior art and/or drawbacks discussed or implied elsewhere in the description can be alleviated.

One object is to introduce a solution which enables supply of power with good capacity to many charging poles effectively. It is introduced, inter alia, embodiments where each charging pole need not be individually wired but a (chained) solution can be provided with good power supply capacity for multiple charging poles.

One object is to introduce a solution which can be well utilized with different kinds of charging devices, with good independence from device manufacturers special solutions.

One object is to introduce a solution which can be well utilized with different number of charging devices per charging pole.

It is introduced, inter alia, embodiments where a general-purpose mounting pole developed for scalable outdoor parking areas, suitable for different types of EV chargers. It is introduced, inter alia, embodiments where the charging pole facilitates that cabling and poles for EV chargers may be installed separately from EV chargers, and which poles allow for installation of one up to four EV chargers of any kind or make at a single pole.

It is introduced, inter alia, embodiments by which requirements of EV chargers can be effectively met. To be able to meet the requirements of EV chargers, a charging standby cabling in a parking lot must enable a maximum power transmission capacity of 22kW alternating current to car spaces even in large outdoor parking areas.

It is brought forward a new charging pole, in particular for a rechargeable vehicle or rechargeable vehicles (also referred to as "Multipole" or "Multipole charging pole"). The charging pole comprises
a pole having a rectangular cross section; which cross section is hollow; the cross section having dimensions allowing for cabling two cables having a cross-sectional area of 50 mm²; the pole comprising a first hole in one of its sides allowing for the cables to be brought through;
a connection housing whereto the two cables, which cables are made of aluminum or other metal, are led into through said first hole;
an installation base, preferably an installation plate, for an EV charger or EV chargers.

With this kind of solution one or more of the above-mentioned objects can be facilitated.

Preferable further details of the charging pole are introduced in the following, which further details can be combined with the charging pole individually or in any combination.

In a preferred embodiment, the charging pole comprises an EV charger or EV chargers, in particular fastened to the installation base. Preferably, each EV charger comprises a connection means connectable to an electrical vehicle, such as a plug means. Preferably, each EV charger is fastened to the installation base with adjustment mounting profiles mounted on the installation plate and attachment bolts.

In a preferred embodiment, each EV charger of the charging pole is connected to one or more electrical components positioned inside the connection housing of the charging pole with a further cabling comprised in the charging pole.

In a preferred embodiment, the pole comprises at another side, which is opposite to said one side, holes (H2) allowing for installation of said installation base, which is preferably an installation plate, for an EV charger or EV chargers; the installation base for an EV charger or EV chargers being attached to the holes (H2).

In a preferred embodiment, the charging pole comprises means for being installed in a ground rooted base.

In a preferred embodiment, the means for being installed in a ground rooted base comprise a cylindrical mounting piece and/or a collar, which is/are connected or connectable to the lower end of the pole. The mounting piece and/or the collar is/are preferably connected or connectable to the lower end of the pole by casting or by welding. Preferably, the lower end of the pole extends into the mounting piece, preferably in particular through said collar. The ground rooted base preferably comprises a space for receiving the mounting piece. The ground rooted base preferably comprises concrete.

In a preferred embodiment, the cabling of the charging pole is/are made by chaining, i.e. a cable is lead into the charging pole and another cable is lead out and into the next charging pole
In a preferred embodiment, the pole is an elongated metal tube, preferably a rectangular elongated metal tube.

In a preferred embodiment, the two cables are made of aluminum.

In a preferred embodiment, the two cables are made of aluminum and have a cross sectional area of more than 30 mm², most preferably 50 mm².

In a preferred embodiment, the cross sectional area of the interior of the pole is more than 18 cm2, the thickness thereof in first cross direction being more than 30 mm, and the width thereof in second cross direction more than 60 mm, which cross directions are orthogonal to each other and to the longitudinal direction of the pole.

In a preferred embodiment, the two cables of the charging pole comprise a first cable and a second cable and they are comprised in two cable components extending in the interior of the pole, namely a first cable component and a second cable component, the first cable component comprising said first cable and an electrical isolation, such as an electrically non-conductive material sheath, around it, and the second cable component comprising said second cable, and an electrical isolation, such as an electrically non-conductive sheath, around it. Preferably, the thickness of each cable component is more than 20 mm, preferably at least 30 mm. Preferably, the sheath surrounds each cable of the cable component forming the outer surface of the cable component.

In a preferred embodiment, each cable component is round in cross section
In a preferred embodiment, the charging pole comprises two cable components extending in the interior of the pole, including a first cable component comprising said first cable and a second cable component comprising said second cable.

In a preferred embodiment, the charging pole comprises two cable components, which are separate cable components.

In a preferred embodiment, the two cable components are led into the connection housing through the hole (H1).

In a preferred embodiment, the two cable components and/or the two cables are connected to one or more electrical components positioned inside the connection housing.

In a preferred embodiment, the connection housing is adapted for chaining the cabling and installing and connecting of additional devices, such as a residual current device, connection bars, terminal blocks, data communication devices, and the like.

In a preferred embodiment, the charging pole comprises adjustment mounting profiles (also referred to as "profiles" or "mounting profiles") mounted on the installation base, i.e. which is preferably an installation plate.

In a preferred embodiment, it comprises attachment bolts, which may be square head bolts, to be positioned in attachment holes of a charger or chargers.

In a preferred embodiment, the attachment bolts are movable in the adjustment mounting profiles in the longitudinal direction thereof.

In a preferred embodiment, the mounting profiles comprise a first horizontally oriented elongated mounting profile, and a second horizontally oriented elongated mounting profile below the first horizontally oriented elongated mounting profile, the vertical distance between the first and second mounting profile being adjustable.

In a preferred embodiment, each profile can hold attachment bolts at a correct distance from each other.

In a preferred embodiment, the mounting profiles are arranged to allow attachment bolts to be moved and adjusted stepless both horizontally and vertically.

In a preferred embodiment, the installation plate is provided with bolt slots for vertical adjustment and mounting of an adjustment mounting profile, preferably at least one of said first and second mounting profile.

In a preferred embodiment, the means for being installed in a ground rooted base are provided at the lower end of the pole, and the hole(s) (H1 and/or H2) is/are at the upper end end of the pole.

In a preferred embodiment, the installation base, i.e. which is preferably installation plate, is attached to the holes (H2).

In a preferred embodiment, the connection housing is attached to the pole at the upper end thereof.

In a preferred embodiment, the charging pole has a rectangular cross section, which cross section is hollow and the cross section having dimensions allowing for cabling two cables having a cross section of 50mm². The pole further comprises a hole in one of its sides allowing for the cables to be brought through and a connection housing whereto the cables are led into through said hole. The pole comprises at the opposite side holes allowing for installation of installation plate for EV chargers, wherein the charging pole comprises means for being installed in a base which is preferably rooted in the ground.

In a preferred embodiment, each said EV charger is an electric vehicle charger.

It is also brought forward a new charging system for charging rechargeable vehicles, comprising charging poles for a rechargeable vehicle as defined anywhere above or in any of the claims of the application, chained such that a cable is lead into each charging pole and another cable is lead out from said charging pole and into the next charging pole.

With this kind of solution one or more of the above-mentioned objects can be facilitated.

Preferable further details of the charging system are introduced in the following, which further details can be combined with the charging system individually or in any combination.

In a preferred embodiment, the charging poles are chained such that a cable component comprising a cable is lead into each charging pole and another cable component comprising another cable is lead out from said charging pole and into the next charging pole.

In a preferred embodiment, the charging system comprises at least a first, second and third charging pole.

In a preferred embodiment, one of said two cable components of the first charging pole is one of the two cable components of the second charging pole, and the other of said two cable components of the second charging pole is one of the two cable components of the third charging pole.

In a preferred embodiment, the two cables and/or the two cable components of each charging pole extend in the interior of the pole of the charging pole.

In a preferred embodiment, electric current of more than 63 A is arranged to be supplied to the charging pole or poles or to the charging system.

### Brief description of the figures

Figure 1 shows an embodiment of the Multipole charging pole for two EV chargers as front view with and without an optional casing for Schuko sockets for car heaters.
Figure 2 shows an embodiment of the Multipole charging pole for one EV charger and an optional casing for Schuko sockets for car heaters.
Figure 3 shows an exploded front view of the Multipole charging pole and the installation plate and adjustment mounting profiles used for fastening an EV charger to the charging pole.
Figure 4 shows another exploded front view of the Multipole charging pole also showing the connection housing as an exploded view.
Figure 5 shows schematically a preferred embodiment of a charging pole in a chained configuration, as well as preferred embodiment of a charging system.
Figure 6 shows schematically preferred details of parts of the charging pole of Figures 1-5 as well as preferred details of the charging system of Figure 5 as a cross-sectional view A-A.

### Detailed description of the Invention

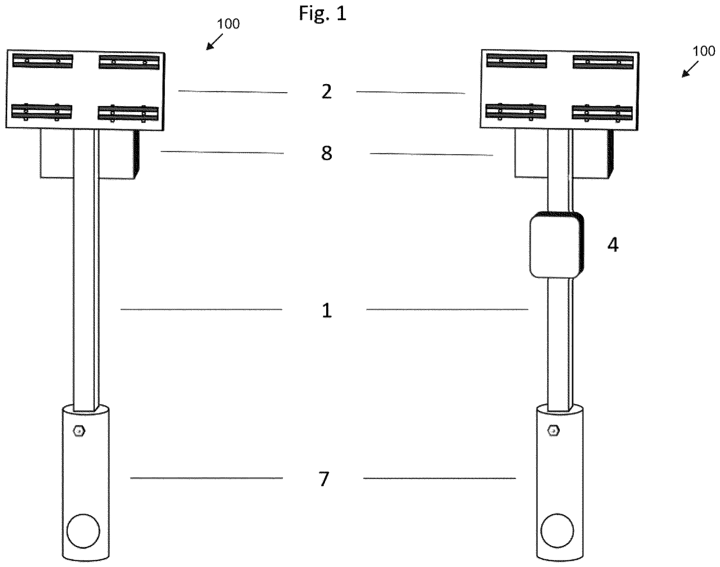

Figure 1 shows a charging pole 100 in particular for a rechargeable vehicle according to an embodiment (also referred to in the application by term "Multipole charging pole"). The Multipole charging pole is a general-purpose EV charger mounting pole developed for outdoor parking areas to be scalable, ie. for every parking slot.

The Multipole charging pole 100 is multi-purpose, it can be used to install Type 2 EV chargers of any make and model that work with alternating current and depending on the model of the charging pole, 1-4 EV chargers may be installed on the same pole.

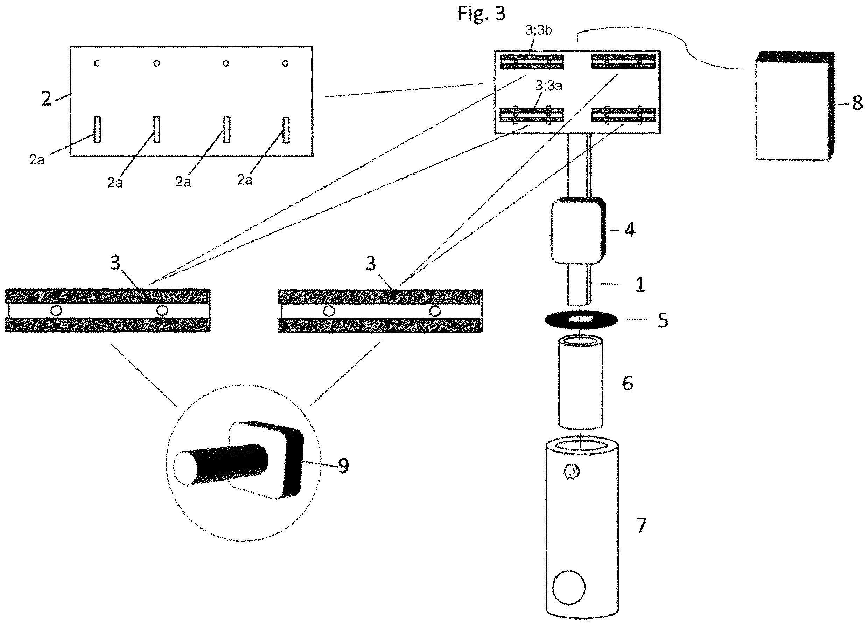

The Multipole charging pole 100 comprises a pole 1 which may be seen in figure 1. Figure 1 shows a front view of the pole, wherein the pole comprises on the front side holes H2 for mounting a plate 2 on which the EV chargers may be installed. At the back of the same pole 1, opposite the mounting holes H2, there is a larger hole H1, with a cross section of approximately 90mm, or a cross section allowing for two cables with a cross sectional area of up to 50mm² to be led through. These cables form the electricity supply cabling which is brought inside the charging pole. At the back side of the pole 1, the pole 1 has a connection box or connection housing 8 for chaining the cabling and installing and connecting of additional devices, such as a residual current device, connection bars, terminal blocks, data communication devices and so on. In figure 3 plate 2, can be seen, plate 2 is an installation plate, which is attached to the holes H2 in the front of the pole 1 as mentioned above. This plate 2 is then used to mount the chargers onto. As mentioned earlier all EV chargers have their own specific fastening means which has led to a situation where there has been no general solution for a mounting pole. This problem is solved by use of an adjustment mounting profile 3 which can be seen in figure 3. Use of such a mounting profile allows for not having the knowledge of the exact location or the number of needed holes during installation of the pole and gives the possibility of installation of the EV charger at a later stage no matter the installation means or needed holes or position thereof.

With the help of the charging pole of the invention, EV charger-ready cabling can be implemented for every car space/parking slot in an outdoor parking area in 3-phase with a maximum of 22kW charging power, without having to install EV chargers during the cabling phase. EV chargers can be acquired and installed in the charging network easily afterwards according to demand.

According to one embodiment of the invention there is a pole version which is especially suited for the Finnish and Nordic markets, which has an option for installing an integrated traditional Schuko box 4 for heating internal combustion engine cars. After the implementation of EV charger-ready cabling, the possibility of heating the cars will also remain in the parking lots.

The Multipole charging pole concept enables construction of a power supply line of up to 100A from a single fuse group (possibly even more than 100A), thanks to which the feed center can be implemented with fewer, larger fuse group outputs. As an option the invention instead of copper cables uses more environmentally friendly aluminum cables with a cross-sectional area of up to 50mm², which are chained, i.e. one cable is lead into each charging pole and another one is lead out and into the next charging pole. With this solution, it is possible to implement larger load management units and offer the same maximum charging power and charging quality to each parking space. With Multipole charging pole concept overall costs are minimized.

Independence from device manufacturers is made possible by Multipole's special attachment method for charging devices, which allows the attachment bolts to be positioned in the attachment holes in the devices, regardless of their location, because the attachment bolts can be moved and adjusted stepless both horizontally and vertically. This is made possible by the use of mounting profiles, such as those shown in figure 3, enabling exact adjustment of the fastening points.

Figure 3 shows an exploded view of the multipole charging pole according to the invention. The multipole comprises an installation plate 2 with bolt slots for vertical adjustment and mounting of adjustment mounting profiles 3. The adjustment mounting profiles may in this manner be installed on the correct height for any type of charger to be fastened on the installation plate. The profile can hold installation bolts 9 at a correct distance from each other in the width direction suitable for the installation of any charger.

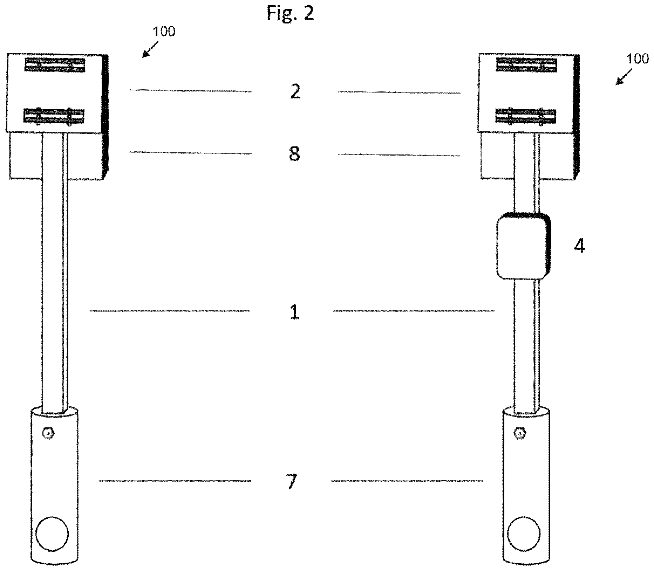

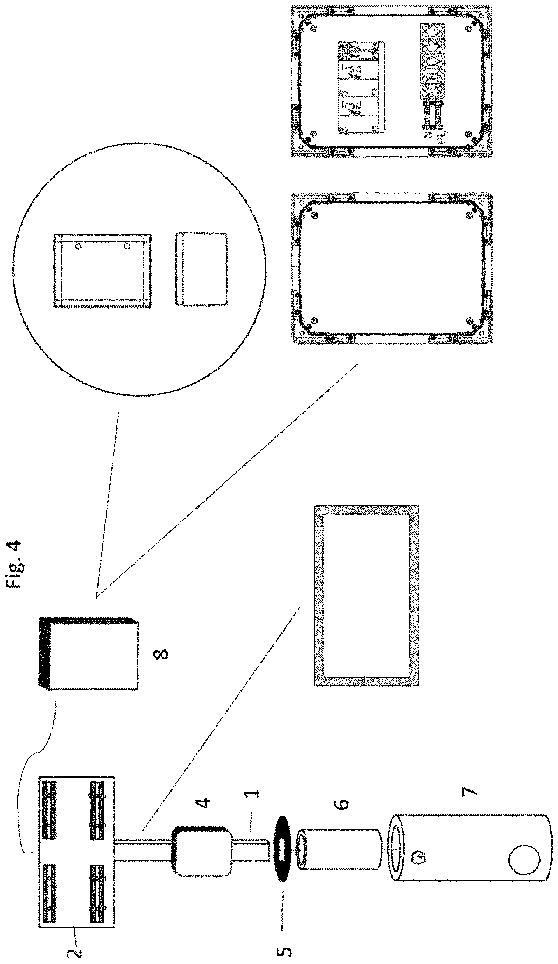

Figures 1 and 2 show additionally to the pole and the installation plate, the base 7 of the pole. This can also be seen in figures 3 and 4 as separate parts, wherein the lower end of the Multipole charging pole's pole 1 is cast into a cylindrical mounting piece 6, which is used to fit and fasten the charging pole to the ground rooted mounting base 7 normally made of concrete. The concrete ground pedestal 7 to be sunk into the ground may be a separate standard basic product that is freely available from electrical product stores in different market areas.

Mostly such ground pedestals irrespective of the market area or manufacturer comprises a mounting hole for installation of a pole or the like. The shape of the cross section of the inner hole is, to be able to receive e.g. a lamp post, always round and the size and spec are same or almost the same, and can receive the multipole according to the invention. If necessary, it is easy to make changes in the dimensions of the mounting piece according to the market area.

According to an embodiment of the invention the mounting piece of the Multipole charging pole comprises a plastic or other material cylindrical casting mold, fixed with screws in an inner casting. The internal casting is preferably made of cement. The mounting piece 6 comprises a surface sealing layer of functional coating material bitumen or the like and the mounting piece further comprises a protective rubber collar 5, which can be seen in figures 3 and 4. Preferably the shape of the mounting piece is cylindrical.

Currently, the device manufacturers' own bases are based on surface mounting flanges, which are anchored directly to a flat surface or to a device manufacturer-specific casting sensor or metal frame that can be sunk into the ground.

One embodiment of the invention only comprises the lower end surface mounting flange. This may be used in locations where it is not possible to dig the foundation into the ground.

In general, the means 5,6 for being installed in a ground rooted base 7 could have also some other structure than what is shown. Particularly, with regard to connection of parts 5 and/or 6 to the lower end of the pole 1, alternatively other kind of structure could be utilized. Particularly, as an alternative, said collar 5 and/or said cylindrical mounting piece 6 could be made of metal and connected to the lower end of the pole 1 by welding.

Independence from device manufacturers is made possible by the Multipole's special attachment method for charging devices, which allows the attachment bolts 9, which may be square head bolts to be positioned in the attachment holes in the devices, regardless of their location, because the attachment bolts 9 can be moved and adjusted steplessly both horizontally and vertically.

Multipole is a universal solution which enables the charging readiness cabling to be implemented without the connections and dependencies specific to the charging device manufacturers, which are strongly limiting and determining factors for cabling implementations.

Due to horizontally and vertically adjustable fastening bolts any manufacturer's charging device, model and make can be attached to the charging pole.

The connection box of the charging pole has the electrical protection devices needed by the charging devices as standard: residual current protection and cable protection circuit breaker, regardless of whether they are present in the charging device.

The connection box 8 preferably has a space reservation ready for other devices needed in the parking area's charging system.

The wiring to charging devices and additional devices can always be brought from the connection box 8 optimally in accordance with the size requirements of their device-specific connection strips.

The basic cabling of the charging post offers a maximum power transmission capacity of 22kW as standard for all parking spaces.

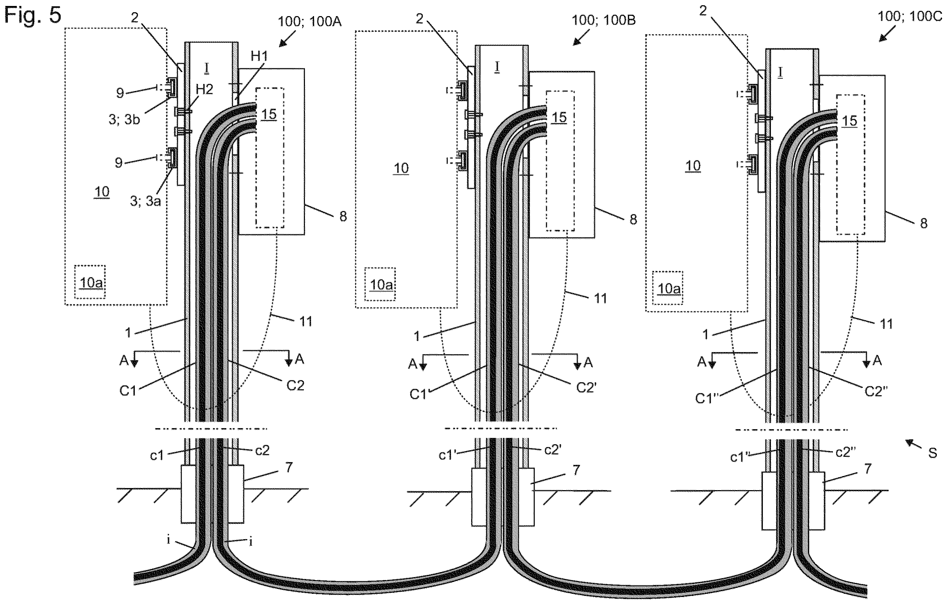

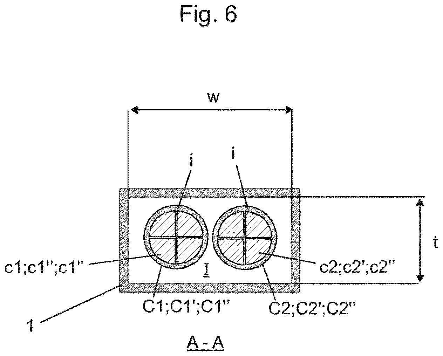

Figure 5 shows a charging system S according to an embodiment for charging rechargeable vehicles. The system S comprises charging poles 100;100A,100B,100C according to an embodiment for charging a rechargeable vehicle. The charging poles 100A,100B,100C shown in and described referring to Figures 5 and 6 are preferably in accordance to the charging pole 100 shown in and described referring to Figures 1-4.

Each charging pole 100;100A,100B,100C in particular for a rechargeable vehicle, comprises a pole 1 having a rectangular cross section; which cross section is hollow. The cross section has dimensions allowing for cabling two cables c1,c2;c1',c2'; c1",c2" having a cross sectional area of 50 mm². The pole 1 comprises a first hole H1 in one of its sides allowing for the cables c1,c2;c1',c2'; c1",c2" to be brought through. The charging pole 100;100A,100B,100C comprises a connection housing 8 whereto the two cables c1,c2;c1',c2'; c1",c2" are led into through said hole H1. Thus, the two cables can be led to the connection housing 8, and the connection housing 8 can be attached to the pole 1 at the side thereof, which is advantageous when the connection housing 8 is relatively large and/or heavy.

The cables c1,c2;c1',c2'; c1",c2" are made preferably of aluminum, but alternatively they could be of some other metal. Aluminum is advantageous since it is a well available well working conducting material for the cable and the cross sectional area thereof can be made vast enough for enabling transmitting of great current. This facilitates chaining of the charging poles as well as that the individual charging poles can have a high charging capacity enabling power and currents required for effective charging with a chained configuration. Aluminum is advantageous material of the cable since it can be effectively and economically dimensioned to have cross sectional area of even 50 mm², which enables currents and power, which are high enough, for effective charging with a chained configuration. Most preferably, the two cables c1,c2;c1',c2'; c1",c2" are made of aluminum and have a cross sectional area of more than 30 mm², preferably 50 mm².

The cross sectional area of the interior I of the pole 1 is more than 18 cm2, the thickness t thereof in first cross direction being more than 30 mm, and the width w thereof in second cross direction more than 60 mm, which cross directions are orthogonal to each other and to the longitudinal direction of the pole 1. Thus, the interior I is large, and well able to accommodate cables c1,c2;c1',c2'; c1",c2" of aluminum and a cross sectional area of more than 30 mm², preferably 50 mm². Thus, the interior I is large, and well able to accommodate also the cable components comprising said cables. Namely cables made of metal require [electric] isolation, and particularly cables conducting high amperage require substantially thick isolation around them.

Each charging pole 100;100A,100B,100C further comprises an installation base 2, which is in the preferred case an installation plate 2, for an EV charger 10 or EV chargers 10.

Each charging pole comprises an EV charger 10 or EV chargers 10, in particular attached to the installation base 2. Each EV charger 10 preferably comprises a connection means 10a connectable to an electrical vehicle, such as a plug means [illustrated schematically]. Via the connection means 10a, current can be provided to a battery of an electric vehicle for charging it.

In the illustrated embodiment, each said EV charger 10 is fastened to the installation base 2 with adjustment mounting profiles 3 mounted on the installation plate 2 and attachment bolts 9. These provide an adjustable means by means of which different EV chargers can be fastened to the charging pole 100.

Each EV charger 10 of the charging pole 100 is connected to one or more electrical components 15 positioned inside the connection housing 8 of the charging pole 100 with a further cabling 11 comprised in the charging pole 100. The connection housing 8 of each charging pole 100 can thus serve as a unit from which current can be delivered further to EV charger 10 via the cabling 11. The charging poles 100 can be chained such that the electrical components 15 positioned inside the connection housings 8 of different charging poles 100;100A-100C are connected by cabling. The charging poles can be installed and the chaining can be constructed early, and the EV chargers 10, regardless of its design and manufacturer, can be connected via the further cabling 11 to the components 15 positioned inside the connection housing 8 at a suitable stage of installation process, e.g. at a suitable moment after the chaining.

In the preferred embodiment, the pole 1 comprises at another side, which is opposite to said one side, holes H2 allowing for installation of said installation base 2, which is preferably an installation plate 2, for an EV charger or EV chargers. The installation base 2 for an EV charger 10 or EV chargers 10 is attached to the holes H2. This is a simple way to attach the EV chargers 10 to the pole 1 on the opposite side than the connection housing 8. Thus, two large and/or heavy objects can be attached to the pole 1 space efficiently and firmly, as well as such that their wiring is easy to arrange. The overall construction becomes well balanced and the parts remain easy to access, service and use.

Generally preferably, the charging pole 100;100A,100B,100C comprises means 5,6 for being installed in a ground rooted base 7 as described earlier above.

The cabling of the charging poles 100;100A,100B,100C is/are made by chaining, i.e. a cable c1 is lead into the charging pole 100;100A,100B,100C and another cable c2 is lead out and into the next charging pole 100;100A,100B,100C.

With regard to the structure of the pole 1, the pole 1 is preferably an elongated metal tube, preferably a rectangular elongated metal tube.

The structure of the cabling of each of the charging poles 100;100A,100B,100C is more specifically such that the two cables c1,c2;c1',c2'; c1",c2" of the charging pole 100;100A,100B,100C comprise a first cable c1;c1';c1" and a second cable c2;c2';c2" and they are comprised in two cable components C1,C2; C1',C2'; C1",C2" extending in the interior I of the pole 1 of the charging pole 100;100A,100B,100C in question, namely a first cable component C1;C1';C1" and a second cable component C2;C2';C2", the first cable component C1;C1';C1" comprising said first cable c1;c1';c1" and an electrical isolation i, such as an electrically non-conductive material sheath, around it, and the second cable component C2;C2';C2" comprising said second cable c2;c2';c2", and an electrical isolation i, such as an electrically non-conductive sheath, around it. Preferred details of the interior I and the cables c1,c2;c1',c2'; c1",c2" and the cable components C1,C2; C1',C2'; C1",C2" are disclosed in Figure 6.

The thickness of each cable component C1,C2; C1',C2'; C1",C2" is preferably more than 20 mm, preferably at least 30 mm. Thus, it well can comprise said cable c1,c2;c1',c2'; c1",c2" of aluminum with a cross sectional area of more than 30 mm², preferably 50 mm². Preferably, more specifically each said first cable component C1;C1';C1" comprises plurality of said first cables c1;c1';c1" and each said second cable component C2;C2';C2" comprises plurality of said second cables c2;c2';c2".

Each said first and second cable component C1,C2; C1',C2'; C1",C2" is preferably round in cross section. The first and second cables are preferably sector -shaped, as illustrated.

The sheath I surrounds each cable of the cable component C1,C2; C1',C2'; C1",C2" forming the outer surface of the cable component C1,C2; C1',C2'; C1",C2".

Each of the charging poles 100;100A,100B,100C comprises two cable components C1,C2; C1',C2'; C1",C2" extending in the interior I of the pole 1, including a first cable component C1;C1';C1" comprising said first cable c1;c1';c1" and a second cable component C2;C2';C2" comprising said second cable c2;c2';c2". The two cable components C1,C2; C1',C2'; C1",C2" and/or the two cables c1,c2;c1',c2'; c1",c2" of each of the charging poles 100;100A,100B,100C are connected to one or more electrical components 15 positioned inside the connection housing 8.

In the charging system S, the charging poles 100;100A,100B,100C are chained such that a cable c1;c1';c1" is lead into each charging pole 100;100A,100B,100C and another cable c2;c2';c2" is lead out from said charging pole 100;100A,100B,100C and into the next charging pole 100;100A,100B,100C. More specifically, the charging poles 100;100A,100B,100C are chained such that a cable component C1;C1';C1" [i.e. the first cable component of the charging pole in question] comprising a cable c1;c1';c1" [i.e. the first cable of the charging pole in question] is lead into each charging pole 100;100A,100B,100C and another cable component C2;C2';C2" [i.e. the second cable component of the charging pole in question] comprising another cable c2;c2';c2" [i.e. the second cable of the charging pole in question] is lead out from said charging pole 100;100A,100B,100C and into the next charging pole 100;100A,100B,100C.

The charging system S illustrated in Figure 5 comprises at least a first 100;100A, second 100;100B and third charging pole 100;100C. One C1 of said two cable components C1,C2 of the first charging pole 100;100A is one C1' of the two cable components C1',C2' of the second charging pole 100;100B, and the other C2' of said two cable components C1',C2' of the second charging pole 100;100A is one C1" of the two cable components C1",C2" of the third charging pole 100;100C.

The cable components C1,C2; C1',C2'; C1",C2" are separate cable components, i.e. they are discrete parts.

As visible in Figure 5, the charging pole 100;100A,100B,100C comprises adjustment mounting profiles 3 mounted on the installation base, which is here an installation plate 2.

The charging pole 100;100A,100B,100C comprises attachment bolts 9, which may be square head bolts, to be positioned in attachment holes of an EV charger or EV chargers. The mounting profiles 3;3a,3b are arranged to allow attachment bolts 9 to be moved and adjusted stepless both horizontally and vertically. The attachment bolts 9 are movable in the profiles 3;3a,3b in the longitudinal direction of the profile 3;3a,3b.

The mounting profiles 3 comprise a first horizontally oriented elongated mounting profile 3a, and a second horizontally oriented elongated mounting profile 3b below the first horizontally oriented elongated mounting profile 3a, the vertical distance d between the first and second mounting profile 3a,3b being adjustable.

The installation plate 2 is provided with bolt slots 2a for vertical adjustment and mounting of an adjustment at least one mounting profile 3;3a of said first and second mounting profile 3b.

Each profile 3a,3b can hold attachment bolts 9 at a correct distance from each other, in particular in the width direction [the longitudinal direction of the mounting profile] suitable for the installation of any charger.

Owing to the adjustability, the adjustment mounting profiles 3 allow fastening of various different EV chargers to the installation base 2.

Generally, the cross section of the pole 1 is most preferably rectangular, but could alternatively have some other shape, such as round, for instance. Thus, the rectangular shape is not a necessity. A rectangular shape however advantageously facilitates providing a large hole on a side of the pole through which thick cables can be led, as well as attaching firmly large and heavy objects to the pole 1, such as in particular a connection housing 8, which is large due to high capacity thereof, and the mounting base for one or more EV chargers, which may together also form a heavy and large structure to be attached to the pole 1.

Generally preferably, the means 5,6 for being installed in a ground rooted base 7 comprise a cylindrical mounting piece 6 and/or a collar 5, which is/are connected or connectable to the lower end of the pole 1. The mounting piece 6 and/or the collar 5 is/are preferably connected or connectable to the lower end of the pole 1 e.g. by casting or by welding. In the preferred embodiments illustrated, the lower end of the pole 1 extends into the mounting piece 6, preferably in particular through said collar 5. The ground rooted base 7 preferably comprises a space for receiving the mounting piece 6. The ground rooted base 7 preferably comprises concrete.

Generally, as mentioned 1-4 EV chargers may be installed on the same charging pole 100. They could all be fastened to the same installation base 2. In the illustrated examples, the installation base 2 is provided for one or two EV chargers. If three or four EV chargers are to be installed on the same charging pole 100, the installation base 2 as illustrated could be provided with additional parts to which the third and fourth EV chargers could be fastened. Then, for example one or more further installation plates could be attached [or integrated] to the installation plate 2 as shown so that they together form the installation base 2. The one or more further installation plates would then extend the capacity of the installation base 2 to be such that it can serve as an installation base for more than 2 EV chargers.

Generally, the structure of the charging pole 100;100A,100B,100C facilitates supply of high amperage to it when it forms a part of a chained multipole charging system, even such high as more than 63 A. This is advantageous particularly for the capacity of a chained multipole charging system. Preferably, in the system S, electric current of more than 63 A is arranged to be supplied to the charging pole or poles 100;100A,100B,100C or to the charging system S.

It is to be understood that the above description and the accompanying Figures are only intended to teach the best way known to the inventors to make and use the invention. It will be apparent to a person skilled in the art that the inventive concept can be implemented in various ways. The above-described embodiments of the invention may thus be modified or varied, without departing from the invention, as appreciated by those skilled in the art in light of the above teachings. It is therefore to be understood that the invention and its embodiments are not limited to the examples described above but may vary within the scope of the claims.

## Claims

1. A charging pole (100;100A,100B,100C), in particular for a rechargeable
vehicle, comprising:
a pole (1) having a rectangular cross section; which cross section is hollow; the cross section having dimensions allowing for cabling two cables (c1,c2;c1',c2'; c1",c2") having a cross sectional area of 50 mm²; the pole (1) comprising a first hole (H1) in one of its sides allowing for the cables (c1,c2;c1',c2'; c1",c2'') to be brought through;
a connection housing (8) whereto the two cables (c1,c2;c1',c2'; c1",c2"), which cables (c1,c2;c1',c2'; c1",c2") are made of aluminum or other metal, are led into through said hole (H1);
an installation base (2), preferably an installation plate (2), for an EV charger (10) or EV chargers (10).

2. A charging pole according to claim 1, wherein the two cables (c1,c2;c1',c2'; c1",c2") are made of aluminum.

3. A charging pole (100;100A,100B,100C) according to any of the preceding claims, wherein the two cables (c1,c2;c1',c2'; c1",c2") are made of aluminum and have a cross sectional area of more than 30 mm², most preferably 50 mm².

4. A charging pole (100;100A,100B,100C) according to any of the preceding claims, wherein the cross sectional area of the interior (I) of the pole (1) is more than 18 cm², the thickness (t) thereof in first cross direction being more than 30 mm, and the width (w) thereof in second cross direction more than 60 mm, which cross directions are orthogonal to each other and to the longitudinal direction of the pole (1).

5. A charging pole (100;100A,100B,100C) according to any of the preceding claims, wherein the two cables (c1,c2;c1',c2'; c1",c2") of the charging pole (100;100A,100B,100C) comprise a first cable (c1;c1';c1") and a second cable (c2;c2';c2") and they are comprised in two cable components (C1,C2; C1',C2'; C1",C2") extending in the interior (I) of the pole (1), namely a first cable component (C1;C1';C1") and a second cable component (C2;C2';C2"), the first cable component (C1;C1';C1") comprising said first cable (c1;c1';c1") and an electrical isolation (i), such as an electrically non-conductive material sheath, around it, and the second cable component (C2;C2';C2") comprising said second cable (c2;c2';c2"), and an electrical isolation (i), such as an electrically non-conductive sheath, around it.

6. A charging pole (100;100A,100B,100C) according to any of the preceding claims, wherein the thickness of each cable component (C1,C2; C1',C2'; C1",C2") is preferably more than 20 mm, preferably at least 30 mm.

7. A charging pole (100;100A,100B,100C) according to any of the preceding claims, wherein the two cable components (C1,C2; C1',C2'; C1",C2") and/or the two cables (c1,c2;c1',c2'; c1",c2") are connected to one or more electrical components (15) positioned inside the connection housing (8).

8. A charging pole (100;100A,100B,100C) according to any of the preceding claims, wherein it comprises an EV charger (10) or EV chargers (10), in particular fastened to the installation base (2), each EV charger (10) of the charging pole (100) preferably being connected to one or more electrical components (15) positioned inside the connection housing (8) of the charging pole (100) with a further cabling (11) comprised in the charging pole (100).

9. A charging pole (100;100A,100B,100C) according to any of the preceding claims, wherein
the pole (1) comprises at another side, which is opposite to said one side, holes (H2) allowing for installation of said installation base (2), which is preferably an installation plate (2), for an EV charger or EV chargers; the installation base (2) for an EV charger (10) or EV chargers (10) being preferably attached to the holes (H2); and/or
the charging pole (100) comprises means (5,6) for being installed in a ground rooted base (7); and/or
the cabling of the charging pole(s) (100;100A,100B,100C) is/are made by chaining, i.e. a cable (c1) is lead into the charging pole (100;100A,100B,100C) and another cable (c2) is lead out and into the next charging pole (100;100A,100B,100C).

10. A charging pole (100;100A,100B,100C) according to any of the preceding claims, wherein the charging pole (100;100A,100B,100C) comprises adjustment mounting profiles (3;3a,3b) mounted on the installation base (2), i.e. which is preferably an installation plate (2).

11. A charging pole (100;100A,100B,100C) according to claim 10, wherein the mounting profiles (3) comprise a first horizontally oriented elongated mounting profile (3a), and a second horizontally oriented elongated mounting profile (3b) below the first horizontally oriented elongated mounting profile (3a), the vertical distance (d) between the first and second mounting profile (3a,3b) being adjustable.

12. A charging pole (100;100A,100B,100C) according to any of the preceding claims 10-11, wherein the mounting profiles (3;3a,3b) are arranged to allow attachment bolts (9) to be moved and adjusted stepless both horizontally and vertically.

13. A charging system (S) for charging rechargeable vehicles, comprising charging poles (100;100A,100B,100C) for a rechargeable vehicle as defined in any of the preceding claims, chained such that a cable (c1;c1';c1'') is lead into each charging pole (100;100A,100B,100C) and another cable (c2;c2';c2") is lead out from said charging pole (100;100A,100B,100C) and into the next charging pole (100;100A,100B,100C).

14. A charging system (S) according to claim 13, wherein the charging poles (100;100A,100B,100C) are chained such that a cable component (C1;C1';C1") comprising a cable (c1;c1';c1'') is lead into each charging pole (100;100A,100B,100C) and another cable component (C2;C2';C2") comprising another cable (c2;c2';c2") is lead out from said charging pole (100;100A,100B,100C) and into the next charging pole (100;100A,100B,100C).

15. A charging system (S) according to any of the preceding claims, wherein the charging system (S) comprises at least a first (100;100A), second (100;100B) and third charging pole (100;100C), wherein one (C1) of said two cable components (C1,C2) of the first charging pole (100;100A) is one (C1') of the two cable components (C1',C2') of the second charging pole (100;100B), and the other (C2') of said two cable components (C1',C2') of the second charging pole (100;100A) is one (C1") of the two cable components (C1",C2") of the third charging pole (100;100C).
